# FASCICULE DE BREVET EUROPEEN

(11) **EP 0 934 462 B1**
(45) Date de publication et mention de la délivrance du brevet: **08.12.2004**
(21) Numéro de dépôt: 97909085.9
(22) Date de dépôt: 21.10.1997
(51) Int. Cl.: F03D 1/04, F03D 7/02

(54) **DISPOSITIF EOLIENNE**
WINDTURBINE
WIND POWER ENGINE

(30) Priorité: 22.10.1996 FR 9612804; 04.03.1997 CH 51097
(43) Date de publication de la demande: 11.08.1999
(73) Titulaire: van der Veken, Germaine, 1080 Saint-jans-Molenbeek (BE)
(72) Inventeur: VAN DER VEKEN, Germaine, B-1080 Saint-Jans-Molenbeek (BE); MARTINET, Pierre, F-42100 Saint Etienne (FR); ADRIAENSSENS, Jozef, B-2018 Antwerpen (BE)
(74) Mandataire: Donné, Eddy
(86) Numéro de dépôt international: PCT/BE1997/000122
(87) Numéro de publication internationale: WO 1998/017912

(56) Documents cités:
- DE-A- 4 428 730
- DE-A- 19 529 096
- FR-A- 2 317 522
- GB-A- 873 173
- US-A- 3 192 712
- US-A- 3 883 750
- US-A- 4 047 832
- US-A- 4 079 264

## Description

Plus particulièrement l'invention concerne un dispositif comprenant une éolienne et des moyens pour augmenter, lors de vitesses du vent faibles, la vitesse du vent vers l'éolienne, ces moyens comprenant au moins un premier élément de guidage du vent qui se rétrécit de manière conique suivant la direction de passage du vent vers l'éolienne.

Un dispositif éolien de ce type est connu du document US 3.883.750. Ce document ne révèle pourtant pas de solution qui offre la possibilité d'un réglage optimal en fonction des vitesses du vent, c.à d. un réglage qui permet d'augmenter l'effet du vent sur l'éolienne pendant des périodes de vent faible et de diminuer cet effet pendant des périodes de vent fort.

L'invention vise un dispositif éolien qui ne présente pas ledit désavantage et qui est particulièrement efficace lors de vitesses du vent faibles aussi bien que lors de vitesses du vent élevées.

A cette fin, l'invention concerne un dispositif éolien comprenant une éolienne et des moyens pour augmenter, lors de vitesses du vent faibles, la vitesse du vent vers l'éolienne, ces moyens comprenant au moins un premier élément de guidage du vent qui se rétrécit de manière conique suivant la direction de passage du vent vers l'éolienne, caractérisé en ce que ce dispositif comporte des moyens permettant de diminuer la vitesse du vent, respectivement le débit du vent, à l'endroit de l'éolienne, qui comprennent d'une part, un second élément de guidage du vent qui rejoint la sortie du premier et s'élargit de manière conique suivant la direction du passage du vent et, d'autre part, des moyens réglables pour déplacer réciproquement l'éolienne et le second élément de guidage du vent, de sorte que l'éolienne s'insère plus loin ou moins loin dans le second élément de guidage du vent.

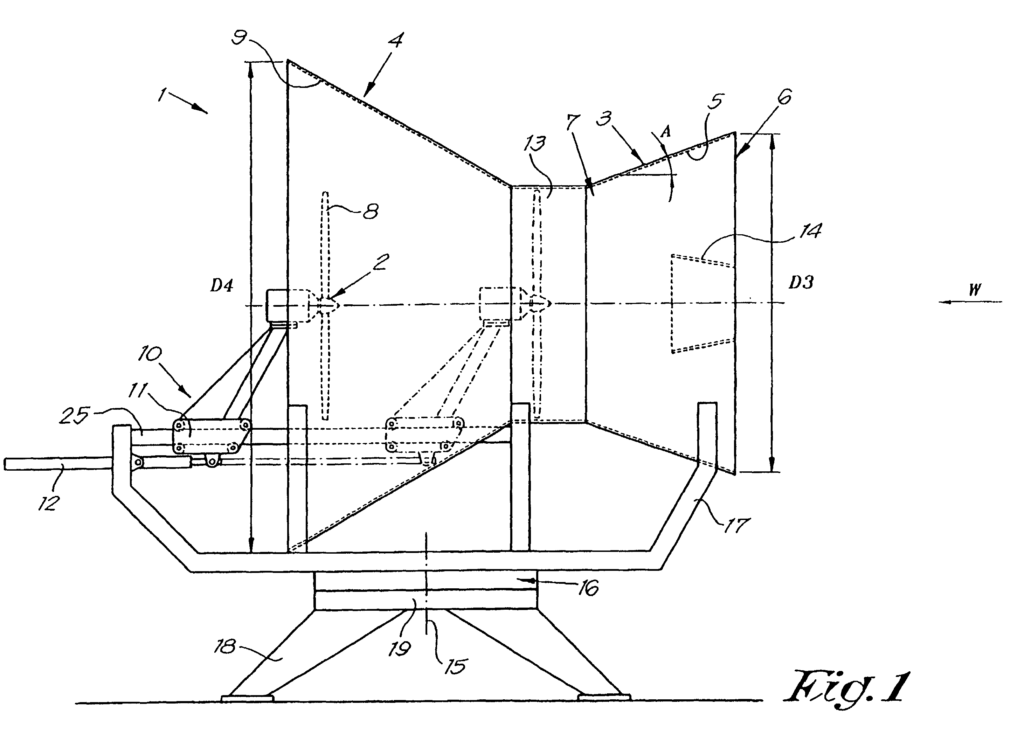

Afin de mieux démontrer les caractéristiques de l'invention, il est décrit ci-dessous, en tant qu'exemple et sans caractère limitatif, une forme d'exécution préférentielle avec référence à la figure 1, qui est une figure unique.

Comme représenté dans la figure 1, le dispositif éolien 1 suivant l'invention consiste essentiellement en une combinaison d'une éolienne 2; des moyens 3 pour augmenter, lors de vitesses du vent faibles, la vitesse du vent vers l'éolienne 2; et des moyens 4 pour influencer, plus particulièrement diminuer lors de vitesses du vent élevées, la vitesse du vent vers l'éolienne 2.

Les moyens 3 pour augmenter le débit du vent à l'endroit de l'éolienne 2 sont composés d'un élément de guidage du vent 5 qui se rétrécit de manière conique suivant la direction de passage du vent W.

Cet élément de guidage du vent 5 consiste essentiellement en un manteau conique avec une pente A qui est de préférence inférieure à 20 degrés. Le but en est que la difference en diamètre à l'entrée 6 et à la sortie 7 de cet élément 5, notamment la réduction de diamètre, produit une augmentation de la vitesse du vent dirigé vers le rotor 8 de l'éolienne 2.

Les moyens 4 pour diminuer la vitesse du vent, respectivement le débit effectif du vent, à l'endroit de l'éolienne 2, comprennent d'une part, un second élément de guidage du vent 9 qui rejoint, de façon directe ou indirecte, la sortie 7 du premier élément 5 et qui s'élargit coniquement suivant la direction du passage du vent et, d'autre part, des moyens 10 qui permettent de déplacer réciproquement l'éolienne 2 et le second élément de guidage du vent 9, de sorte que l'éolienne 2 s'insère plus loin ou moins loin dans le second élément de guidage du vent 9.

Dans la forme d'exécution représentée dans la figure 1, l'élément de guidage du vent 9 est fixe et les moyens 10 précités sont composés d'un chariot 11, sur lequel l'éolienne 2 est montée, et des moyens d'entraînement 12 pour déplacer le chariot 11.

Dans l'exemple représenté, ces moyens d'entraînement 12 sont composés d'un ou de plusieurs cylindres à pression hydraulique qui peuvent être commandés automatiquement suivant les besoins des vents sur l'éolienne. Néanmoins, il est évident que, suivant une variante, l'entraînement peut être produit de manière mécanique, électrique ou autre.

Evidemment, suivant une variante, l'éolienne 2 peut être montée de manière fixe, tandis que l'élément de guidage du vent 9, avec ou sans l'élément de guidage du vent 5, peut être déplacé.

Il faut remarquer que l'éolienne 2 possède un diamètre de rotor qui correspond à peu près au diamètre du passage entre le premier et le second élément de guidage du vent, respectivement 5 et 9.

Comme représenté à la figure 1, une pièce cylindrique intermédiaire 13 peut être prévue.

Il faut remarquer que le diamètre d'entrée D3 est plus petit que le diamètre de sortie D4.

Le vent accroît toujours dans l'élément de guidage du vent 5, aussi bien lors de vitesses du vent faibles que lors de vitesses du vent élevées. Puisque le diamètre D4 est plus grand que le diamètre D3 et que l'éolienne 2 peut être déplacée, un affaiblissement aussi bien qu'un accroissement du vent peuvent être réalisés à l'intérieur du dispositif éolien, ceci en comparaison avec le vent extérieur.

Eventuellement, comme indiqué dans la figure 1, l'élément de guidage 5 peut être équipé d'une pièce de guidage 14 qui s'élargit coniquement.

L'ensemble est de préférence pivotable autour d'un axe vertical 15 et est pourvu de moyens d'entraînement 16 pour le placer dans le vent. L'éolienne 2 et les éléments de guidage du vent 5 et 9 sont à cet effet montés sur un châssis 17 qui est placé de manière pivotante sur un bâti fixe 18-19.

Le fonctionnement peut facilement être déduit de la figure 1.

De préférence, l'ensemble est toujours placé en face du vent et est tenu dans le vent par les moyens d'entraînement 16, qui peuvent être commandés automatiquement en fonction des données d'un dispositif de mesurage qui détermine la direction du vent.

En cas d'un vent faible, l'éolienne 2 est positionnée dans la pièce 13, c.à d. dans la position droite montrée dans la figure 1. La conicité du premier élément de guidage du vent 5 augmente considérablement le flux du vent à l'endroit de l'éolienne 2.

Dès que la vitesse du vent accroît en plein air ou lors d'une tempête, le dispositif éolien ne sera pas détourné hors de la direction du vent, restant ainsi en fonction. Dans ce cas précis, l'éolienne 2 est déplacée en arrière, c.à d. dans une position plus vers la gauche dans la figure 1. Ceci résulte en ce que seulement une partie du vent capturé par l'élément 5 arrive sur l'éolienne, de sorte que l'éolienne 2 n'est soumise qu'à des vitesses de vent permises.

La présente invention n'est nullement limitée aux formes d'exécution décrites ci-dessus et représentées aux figures, mais un tel dispositif éolien peut être réalisé en différentes formes et dimensions, sans pour cela sortir du cadre de l'invention.

## Revendications

1. Dispositif éolien, comprenant une éolienne (2) et des moyens (3) pour augmenter, lors de vitesses du vent faibles, la vitesse du vent vers l'éolienne (2), ces moyens (3) comprenant au moins un premier élément de guidage du vent (5) qui se rétrécit de manière conique suivant la direction de passage du vent (W) vers l'éolienne (2), **caractérisé en ce que** ce dispositif (1) comporte des moyens (4) permettant de diminuer la vitesse du vent, respectivement le débit du vent, à l'endroit de l'éolienne (2) qui comprennent, d'une part, un second élément de guidage du vent (9) qui rejoint la sortie (7) du premier et s'élargit de manière conique suivant la direction de passage du vent et, d'autre part, des moyens réglables (10) pour déplacer réciproquement l'éolienne (2) et le second élément de guidage du vent (9), de sorte que l'éolienne (2) s'insère plus loin ou moins loin dans le second élément de guidage du vent (9).

2. Dispositif éolien suivant la revendication 1, **caractérisé en ce que** les deux éléments de guidage du vent (5-9) sont montés de manière fixe et **en ce que** l'éolienne (2) peut être déplacée axialement par rapport à ces éléments de guidage du vent (5-9).

3. Dispositif éolien suivant la revendication 2, **caractérisé en ce que** les moyens (10) pour déplacer l'éolienne (2) sont composés d'un chariot (11) sur lequel l'éolienne (2) est montée et de moyens d'entraînement (12) pour déplacer le chariot (11).

4. Dispositif éolien suivant l'une des revendications précédentes, **caractérisé en ce que** l'éolienne (2) possède un diamètre de rotor (8) qui correspond à peu près au diamètre à l'endroit de la transition entre le premier et le second élément de guidage du vent (5-9).

5. Dispositif éolien suivant la revendication 4, **caractérisé en ce que** la transition entre le premier élément de guidage (5) et le second élément de guidage (9) comporte une pièce cylindrique intermédiaire (13).

6. Dispositif éolien suivant l'une des revendications précédentes, **caractérisé en ce que** le diamètre d'entrée (D3) est plus petit que le diamètre de sortie (D4).

7. Dispositif éolien suivant l'une des revendications précédentes, **caractérisé en ce que** l'ensemble est pivotable autour d'un axe vertical (15) et est pourvu de moyens d'entraînement (16) pour le mettre et le retenir dans le vent.

## Patentansprüche

1. Windkraftvorrichtung, bestehend aus einer Windturbine (2) und Mitteln (3), um bei geringen Windgeschwindigkeiten die Geschwindigkeit des Winds zur Windturbine (2) hin zu erhöhen, wobei diese Mittel (3) mindestens ein erstes Windleitelement (5) enthalten, das sich kegelförmig gemäß der Winddurchgangsrichtung (W) zur Windturbine (2) hin verjüngt, **dadurch gekennzeichnet, dass** diese Vorrichtung (1) Mittel (4) enthält, die es ermöglichen, die Windgeschwindigkeit bzw. Windleistung am Standort der Windturbine (2) zu vermindern, und die einerseits ein zweites Windleitelement (9), das sich am Ausgang (7) des ersten anschließt und sich kegelförmig gemäß der Winddurchgangsrichtung erweitert, und andererseits regulierbare Mittel (10) enthalten, um wechselweise die Windturbine (2) und das zweite Windleitelement (9) so zu verschieben, dass die Windturbine (2) sich mehr oder weniger weit in das zweite Windleitelement (9) einfügt.

2. Windkraftvorrichtung nach Anspruch 1, **dadurch gekennzeichnet, dass** die zwei Windleitelemente (5-9) fest montiert sind und dass die Windturbine (2) axial in Bezug auf diese Windleitelemente (5-9) verschoben werden kann.

3. Windkraftvorrichtung nach Anspruch 2, **dadurch gekennzeichnet, dass** die Mittel (10) zum Verschieben der Windturbine (2) aus einem Schlitten (11) bestehen, auf dem die Windturbine (2) montiert ist, und Mitnahmemitteln (12) zum Verschieben des Schlittens (11).

4. Windkraftvorrichtung nach einem der vorhergehenden Ansprüche, **dadurch gekennzeichnet, dass** die Windturbine (2) einen Rotordurchmesser (8) besitzt, der ungefähr dem Durchmesser an der Übergangsstelle zwischen dem ersten und dem zweiten Windleitelement (5-9) entspricht.

5. Windkraftvorrichtung nach Anspruch 4, **dadurch gekennzeichnet, dass** der Übergang zwischen dem ersten Windleitelement (5) und dem zweiten Windleitelement (9) ein zylindrisches Zwischenstück (13) enthält.

6. Windkraftvorrichtung nach einem der vorhergehenden Ansprüche, **dadurch gekennzeichnet, dass** der Eingangsdurchmesser (D3) kleiner ist als der Ausgangsdurchmesser (D4).

7. Windkraftvorrichtung nach einem der vorhergehenden Ansprüche, **dadurch gekennzeichnet, dass** das Ganze schwenkbar um eine senkrechte Achse (15) ist und mit Mitnahmemitteln (16) versehen ist, um es in den Wind zu bringen und dort zu halten.

## Claims

1. Aeolian device, comprising a wind power engine (2) and means (3) to increase the wind velocity towards the wind power engine (2) in case of low wind speeds, whereby these means (3) comprise at least a first wind guiding element (5) which narrows in a conical manner according to the direction in which the wind (W) blows towards the wind power engine (2), **characterised in that** the device (1) comprises means (4) making it possible to reduce the wind velocity, the wind stream respectively, on the spot of the wind power engine (2), which comprise a second wind guiding element (9) which is connected to the output (7) of the first one and which widens in a conical manner according to the direction in which the wind blows on the one hand, and adjustable means (10) to reciprocally move the wind power engine (2) and the second wind guiding element (9), such that the wind power engine (2) fits farther or less farther in the second wind guiding element (9).

2. Aeolian device according to claim 1, **characterised in that** the two wind guiding elements (5-9) are mounted fixed and **in that** the wind power engine (2) can be axially moved in relation to said wind guiding elements (5-9).

3. Aeolian device according to claim 2, **characterised in that** the means (10) for moving the wind power engine (2) are composed of a carriage (11) upon which the wind power engine (2) is mounted and of driving means (12) to move said carriage (11).

4. Aeolian device according to any of the preceding claims, **characterised in that** the wind power engine (2) has a rotor (8) diameter which corresponds more or less to the diameter at the place of transition between the first and the second wind guiding element (5-9).

5. Aeolian device according to claim 4, **characterised in that** the transition between the first guiding element (5) and the second guiding element (9) comprises an intermediary cylindrical piece (13).

6. Aeolian device according to any of the preceding claims, **characterised in that** the input diameter (D3) is smaller than the output diameter (D4).

7. Aeolian device according to any of the preceding claims, **characterised in that** the whole can rotate around a vertical axis (15) and is provided with driving means (16) to put it up and maintain it in the wind.
